# EUROPEAN PATENT SPECIFICATION

(11) **EP 3 794 742 B1**
(45) Date of publication and mention of the grant of the patent: **28.10.2026**
(21) Application number: 18733830.6
(22) Date of filing: 19.06.2018
(51) Int. Cl.: H04B 7/06, H04W 72/04

(54) **CLIENT DEVICE, NETWORK ACCESS NODE AND METHODS FOR EFFICIENT LINK RECONFIGURATION**
CLIENT-VORRICHTUNG, NETZZUGANGSKNOTEN UND VERFAHREN ZUR EFFIZIENTEN VERBINDUNGSREKONFIGURATION
DISPOSITIF CLIENT, NOEUD D'ACCÈS AU RÉSEAU ET PROCÉDÉS POUR UNE RECONFIGURATION DE LIAISON EFFICACE

(43) Date of publication of application: 24.03.2021
(73) Proprietor: HUAWEI TECHNOLOGIES CO., LTD., Shenzhen, Guangdong 518129 (CN)
(72) Inventor: LINDOFF, Bengt, 16440 Kista (SE); MOPIDEVI, Rama Kumar, 16440 Kista (SE); WANG, Neng, 16440 Kista (SE); TUMULA, Chaitanya, 16440 Kista (SE)
(74) Representative: Goddar, Heinz J.
(86) International application number: PCT/EP2018/066255
(87) International publication number: WO 2019/242844

(56) References cited:
- HUAWEI ET AL: "Further discussion on RLM requirements for NR", vol. RAN WG4, no. San Diego, USA; 20180122 - 20180126, 15 January 2018 (2018-01-15), XP051388256, Retrieved from the Internet <URL:http://www.3gpp.org/ftp/tsg%5Fran/WG4%5FRadio/TSGR4%5FAHs/TSGR4%5FAH%2D1801/Docs/> [retrieved on 20180115]
- INTERDIGITAL COMMUNICATIONS: "RLM for NR", vol. RAN WG2, no. Spokane, USA; 20170403 - 20170407, 3 April 2017 (2017-04-03), XP051244855, Retrieved from the Internet <URL:http://www.3gpp.org/ftp/Meetings_3GPP_SYNC/RAN2/Docs/> [retrieved on 20170403]
- AT&T: "Beam Recovery for Full and Partial Control Channel Failure", vol. RAN WG1, no. Prague, Czech Republic; 20171009 - 20171013, 8 October 2017 (2017-10-08), XP051341571, Retrieved from the Internet <URL:http://www.3gpp.org/ftp/Meetings_3GPP_SYNC/RAN1/Docs/> [retrieved on 20171008]
- HUAWEI ET AL: "Further discussion on RLM requirements for NR", vol. RAN WG4, no. San Diego, USA; 20180122 - 20180126, 15 January 2018 (2018-01-15), XP051388256, Retrieved from the Internet <URL:http://www.3gpp.org/ftp/tsg%5Fran/WG4%5FRadio/TSGR4%5FAHs/TSGR4%5FAH%2D1801/Docs/> [retrieved on 20180115]
- INTERDIGITAL COMMUNICATIONS: "RLM for NR", vol. RAN WG2, no. Spokane, USA; 20170403 - 20170407, 3 April 2017 (2017-04-03), XP051244855, Retrieved from the Internet <URL:http://www.3gpp.org/ftp/Meetings_3GPP_SYNC/RAN2/Docs/> [retrieved on 20170403]
- AT&T: "Beam Recovery for Full and Partial Control Channel Failure", vol. RAN WG1, no. Prague, Czech Republic; 20171009 - 20171013, 8 October 2017 (2017-10-08), XP051341571, Retrieved from the Internet <URL:http://www.3gpp.org/ftp/Meetings_3GPP_SYNC/RAN1/Docs/> [retrieved on 20171008]

## Description

### Technical Field

The invention relates to a client device and a network access node for efficient link reconfiguration. Furthermore, the invention also relates to corresponding methods and a computer program.

### Background

The 5G cellular system, New Radio (NR), is currently being standardized and is targeting radio spectrum from below 1 GHz up to and above 60 GHz. To allow for such diverse radio environments, NR will support both different system bandwidths and different numerologies, i.e. different sub-carrier-spacings, from 15 kHz up to 120 or even 240 kHz. Furthermore, for 10+ GHz carriers, multiple antennas and beamforming are assumed to be used to combat the higher path loss at such high radio frequencies.

When beamforming is used, a next generation nodeB (gNB) comprising multiple antennas may transmit data in several directions in different transmit beams. The user equipment (UE) therefore has to tune its own receive antennas in different receive beam directions to communicate with the gNB. In order for the UE to be able to detect and track the transmit beams of the gNB, the UE performs beam monitoring. Hence, the gNB transmits known pilot signals in serving and adjacent beams, which the UE receives and uses to detect possible transmit beams, so called candidate beams, to switch to in case of changes in the radio environment.

Each possible connection between the UE and the gNB is called a beam pair link (BPL), where a BPL consists of a transmit beam associated to the transmitter and a receive beam associated to the receiver. Hence, a BPL can be seen as a spatial direction of a radio transmission, where the transmit beam corresponds to a certain spatial transmit direction and the receive beam corresponds to a certain spatial receive direction. Furthermore, the spatial directions are further generated in the transmitter and receiver by different spatial transmission and reception parameters tuning the respective antenna transmit and receive panel in the respective spatial direction. The gNB will configure a set of BPLs for the UE to monitor. The configured set of monitored BPLs may be based on which BPL the UE has detected. This set can for example comprise all the BPLs associated with control channels and data channels between the gNB and the UE. The gNB will also configure a set of serving BPLs which will be used to transmit associated control information to the UE. The set of serving BPLs is a subset or equal to the set of monitored BPLs. The UE monitors the quality of the set of monitored BPLs and reports the quality in beam measurement report to the gNB. When the quality of the received signal in a BPL is below a threshold indicating unreliable detection, the BPL is in failure. If all serving BPLs for a UE are in failure, a beam failure is declared and the UE performs a beam failure recovery procedure.

The 3GPP draft "Further discussion on RLM requirements for NR" by Huawei and HiSilicon, R4-1800631, Jan. 22nd to 26th, 2018, discusses radio link monitoring (RLM) techniques for new radio, wherein different BLER threshold pairs are used for URLLC and eMBB scenarios. The UE performs downlink link quality evaluation based on RLM reference signal resources to derive a hypothetical PDCCH BLER (or other SINR-like metric).

The 3GPP draft "RLM for NR" by InterDigital Communications, R2-1702875, Apr. 3rd to 7th, 2017, describes a UE, which supports multiple services. The UE is configured to monitor separate control channels (e.g. for URLLC and eMBB), which may have different desired BLER targets and/or experience different radio link conditions. The UE may estimate and measure the radio link quality of different control channels to ensure a certain target BLER for the associated service. The UE may perform RLM independently for different control channels. Different services (e.g. URLLC and eMBB) may have different requirements and the network may configure the RLM quality targets (e.g. Qin/Qout) independently for each control channel. Further, the UE may continuously measure a set of candidate beams and switch between beams in the candidate set. A beam recovery procedure will further be triggered when the UE is unable to use a beam in the candidate set.

The 3GPP draft "Beam recovery for full and partial control channel failure" by AT&T, R1-1718389, Oct. 9th to 13th, 2017, discusses a beam failure recovery procedure, a new candidate beam identification technique, and recovery request transmissions.

### Summary

An objective of embodiments of the invention is to provide a solution which mitigates or solves the drawbacks and problems of conventional solutions.

The above and further objectives are solved by the subject matter of the independent claims. Further advantageous embodiments of the invention can be found in the dependent claims.

The invention is defined by the independent claims. Advantageous embodiments of the invention are given by the dependent claims.

### Brief Description of the Drawings

The appended drawings are intended to clarify and explain different embodiments of the invention, in which:
- Fig. 1 shows a client device according to an embodiment of the invention;
- Fig. 2 shows a method for a client device according to an embodiment of the invention;
- Fig. 3 shows a network access node according to an embodiment of the invention;
- Fig. 4 shows a method for a network access node according to an embodiment of the invention;
- Fig. 5 shows a wireless communication system according to an embodiment of the invention;
- Fig. 6 shows scenarios for the determined quality of a first transmit beam according to an embodiment of the invention;
- Fig. 7 shows scenarios for the determined quality of a second transmit beam according to an embodiment of the invention;
- Fig. 8 shows scenarios for the determined quality of a first transmit beam according to an embodiment of the invention;
- Fig. 9 shows signaling between a client device and a network access node according to an embodiment of the invention.

### Detailed Description

In conventional systems the UE monitors the quality of serving BPLs based on a single quality threshold. With the introduction of high reliability services, the target block error rate (BLER) for data traffic can be as low as 1e-5. To support such high reliability services, beam monitoring with respect to a single quality threshold may not be sufficient to maintain and recover beams and to meet QoS requirements associated with high reliability services. For example, assume the following scenario, a UE supports both a high reliability service such as an ultra-reliable low latency communication (URLLC) service and a service with lower reliability requirements such as an enhanced mobile broadband (eMBB) service. The UE monitors the quality of transmit beams based on an eMBB threshold. Depending on the modulation and coding scheme (MCS) used to transmit the downlink control information (DCI) of the URLLC service and the eMBB service, the received signal received power (RSRP) required to decode URLLC DCI may be higher or lower than the RSRP required to decode eMBB DCI. When the RSRP required to decode URLLC DCI is higher than the RSRP required to decode eMBB DCI, the UE does not trigger beam recovery procedure when a transmit beam fails with respect to URLLC as long as the quality of the transmit beam is still above the eMBB threshold. On the other hand, when the RSRP required to decode URLLC DCI is lower than the RSRP required to decode eMBB, the UE triggers beam recovery procedure when the quality of a transmit beam is below the eMBB threshold, even if the link is still capable of handling the URLLC service. Such a beam recovery procedure might affect the QoS requirements of the URLLC service. Thus, the inventors have identified a need to improve beam monitoring and the initiation of link reconfiguration when a UE supports two service types having different service requirements, such as URLLC services and eMBB services.

To overcome the short comings of conventional beam monitoring based on a single quality threshold, the invention introduces monitoring against two quality threshold values per beam. Hence, according to embodiments of the invention a client device compares the quality of a transmit beam from a network access node with two quality threshold values, where each quality threshold value is associated with a specific service type. The client device performs actions associated with link reconfiguration based on the outcome of the comparison.

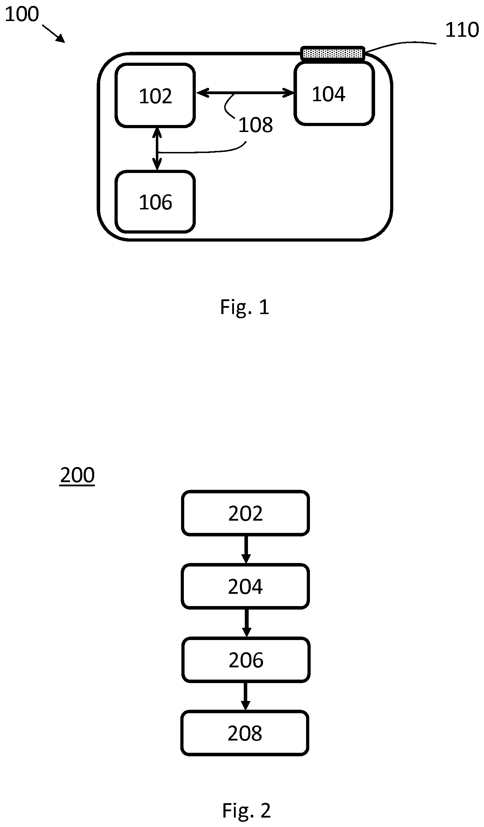

Fig. 1 shows a client device 100 according to an embodiment of the invention. In the embodiment shown in Fig. 1, the client device 100 comprises a processor 102, a transceiver 104 and a memory 106. The processor 102 is coupled to the transceiver 104 and the memory 106 by communication means 108 known in the art. The client device 100 further comprises an antenna or antenna array 110 coupled to the transceiver 104, which means that the client device 100 is configured for wireless communications in a wireless communication system.

That the client device 100 is configured to perform certain actions should in this disclosure be understood to mean that the client device 100 comprises suitable means, such as e.g. the processor 102 and the transceiver 104, configured to perform said actions.

According to embodiments of the invention the client device 100 is configured to receive data associated with a first service type, data associated with a second service type, and a first reference signal all transmitted in a first transmit beam from a network access node 300 over a radio link 502. The data associated with the first service type, the data associated with the second service type, and the first reference signal may be transmitted by the network access node 300 aperiodically or periodically and in any order. Hence, the client device 100 may receive data associated with two different service types, i.e. the first service type and the second service type, plus a reference signal, all transmitted in the same first transmit beam, in any order. The client device 100 is further configured to determine a quality of the first transmit beam based on the received first reference signal and compare the determined quality of the first transmit beam with a first quality threshold value and a second quality threshold value. The first quality threshold value is associated with the first service type and the second quality threshold value is associated with the second service type, and the first quality threshold value is higher than the second quality threshold value. The client device 100 is further configured to transmit an indication associated with reconfiguration of the radio link 502 to the network access node 300 based on the comparison of the quality of the first transmit beam with the first quality threshold value and the second quality threshold value.

Fig. 2 shows a flow chart of a corresponding method 200 which may be executed in a client device 100, such as the one shown in Fig. 1. The method 200 comprises receiving 202 data associated with a first service type, data associated with a second service type, and a first reference signal all transmitted in a first transmit beam from a network access node 300 over a radio link 502. The method 200 further comprises determining 204 a quality of the first transmit beam based on the received first reference signal and comparing 206 the determined quality of the first transmit beam with a first quality threshold value and a second quality threshold value. The first quality threshold value is associated with the first service type and the second quality threshold value is associated with the second service type, and the first quality threshold value is higher than the second quality threshold value. The method 200 further comprises transmitting 208 an indication associated with reconfiguration of the radio link 502 to the network access node 300 based on the comparison of the quality of the first transmit beam with the first quality threshold value and the second quality threshold value.

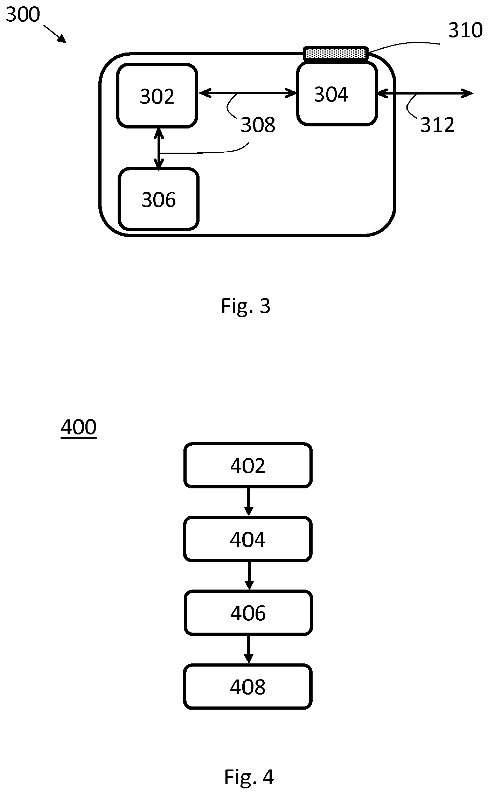

Fig. 3 shows a network access node 300 according to an embodiment of the invention. In the embodiment shown in Fig. 3, the network access node 300 comprises a processor 302, a transceiver 304 and a memory 306. The processor 302 is coupled to the transceiver 304 and the memory 306 by communication means 308 known in the art. The network access node 300 may be configured for both wireless and wired communications in wireless and wired communication systems, respectively. The wireless communication capability is provided with an antenna or antenna array 310 coupled to the transceiver 304, while the wired communication capability is provided with a wired communication interface 312 coupled to the transceiver 304.

That the network access node 300 is configured to perform certain actions should in this disclosure be understood to mean that the network access node 300 comprises suitable means, such as e.g. the processor 302 and the transceiver 304, configured to perform said actions.

According to embodiments of the invention the network access node 300 is configured to transmit a first quality threshold value and a second quality threshold value to the client device 100. The first quality threshold value is associated with a first service type and the second quality threshold value is associated with a second service type. The network access node 300 is further configured to transmit data associated with the first service type, data associated with the second service type, and a first reference signal in a first transmit beam to a client device 100 over a radio link 502. The network access node 300 is further configured to receive an indication associated with reconfiguration of the radio link 502 from the client device 100 and perform reconfiguration of the radio link 502 to the client device 100 based on the received indication associated with reconfiguration of the radio link 502. The indication is transmitted by the client device 100 based on the first quality threshold value, the second quality threshold value, and the first reference signal as described above.

Fig. 4 shows a flow chart of a corresponding method 400 which may be executed in a network access node 300, such as the one shown in Fig. 3. The method 400 comprises transmitting 402 a first quality threshold value and a second quality threshold value to the client device 100. The first quality threshold value is associated with a first service type and the second quality threshold value is associated with a second service type. The method 400 further comprises transmitting 404 data associated with the first service type, data associated with the second service type, and a first reference signal in a first transmit beam to a client device 100 over a radio link 502. The method 400 further comprises receiving 406 an indication associated with reconfiguration of the radio link 502 from the client device 100 and performing 408 reconfiguration of the radio link 502 to the client device 100 based on the received indication associated with reconfiguration of the radio link 502.

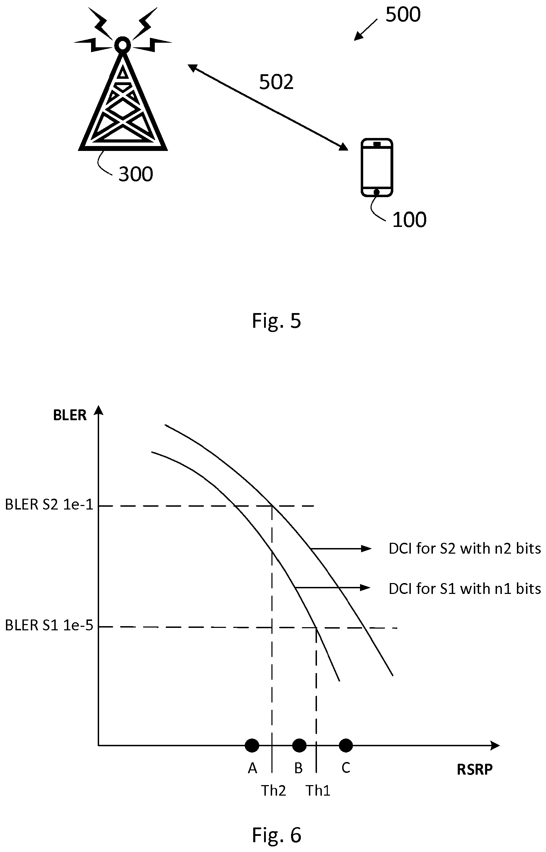

Fig. 5 shows a wireless communication system 500 according to an implementation. The wireless communication system 500 comprises a client device 100 and a network access node 300 configured to operate in the wireless communication system 500. For simplicity, the wireless communication system 500 shown in Fig. 5 only comprises one client device 100 and one network access node 300. However, the wireless communication system 500 may comprise any number of client devices 100 and any number of network access nodes 300 without deviating from the scope of the invention.

In the embodiment shown in Fig. 5, the client device 100 is connected to the network access node 300 over a radio link 502. The radio link 502 is assumed to be configured for a first service type and a second service type. In other words, the radio link 502 is used to transmit data associated with the first service type and data associated with the second service type between the network access node 300 and the client device 100. The first service type may have at least one of a first latency constraint and a first reliability constraint and the second service type may have at least one of a second latency constraint and a second reliability constraint, where the first latency constraint is different from the second latency constraint and the first reliability constraint is different from the second reliability constraint. At least one of the first latency constraint, the second latency constraint, the first reliability constraint, and the second reliability constraint may associated with at least one of: a quality of service flow identity, a network slice selection assistance information configuration, a radio resource control parameter, and a medium access control parameter.

In embodiments, the first service type may be a service with strict latency constraint and/or reliability constraint, such as e.g. an URLLC service requiring residual BLER of 10e-5 and latency of 1 ms, while the second service type may be a service with less strict latency constraint and/or reliability constraint, such as e.g. an eMBB service. The client device 100 may determine the latency constraint of the first service type and the second service type e.g. based on a delay threshold and may determine the reliability constraint of the first service type and the second service type e.g. based on an error rate threshold.

The network access node 300 transmits data associated with the first service type and data associated with the second service type to the client device 100 over the radio link 502 using a first spatial-domain transmit filter, i.e. in a first transmit beam. The transmission of data associated with the first service type and/or the second service type can be either grant-based or grant-free communication. The data associated with the first service type and the second service type can be any type of data such as e.g. control information or user data. For example, the data may be DCI transmitted in a physical downlink control channel (PDCCH). In this case, DCI associated with the first service type may be transmitted from the network access node 300 with a predefined first modulation and coding scheme in a first pre-configured time-frequency resources to the client device 100. The DCI associated with the first service type may comprise n1 bits of information. The network access node 300 may further transmit DCI associated with the second service type to the client device 100. The DCI associated with the second service type may be transmitted using the same or different modulation and coding scheme and time-frequency resources used to transmit the DCI associated with the first service type. Hence, the DCI associated with the second service type may be transmitted using the first modulation and coding scheme in the pre-configured first time-frequency resources, using the first modulation and coding scheme in a pre-configured second time-frequency resources, or using a second modulation and coding scheme in a pre-configured second time-frequency resources. The DCI associated with the second service type may comprise n2 bits of information, where n2 may be larger than n1.

In addition to data associated with the first service type and data associated with the second service type, the network access node 300 transmits a first set of reference signals in the first transmit beam. The first set of reference signals are used by the client device 100 to determine the quality of the first transmit beam. Thereby, the client device 100 can monitor the quality of the first transmit beam, which in this case is a serving transmit beam. The network access node 300 further transmits a second set of reference signals using additional spatial-domain transmit filter configurations, i.e. in additional transmit beams. Based on the received second set of reference signals the client device 100 determines the quality of the additional transmit beams. In this way, the client device 100 can identify a candidate beam (a second transmit beam) from the additional transmit beams which is suitable to switch to in case the serving first transmit beam fails.

The first and second sets of reference signals can e.g. be channel state information-reference symbols (CSI-RSs) or synchronization signal blocks (SSBs). Furthermore, the first set of reference signals may be quasi-collocated with the first transmit beam used for transmitting a dedicated physical downlink control channel and a physical downlink scheduled data channel; and the second set of reference signals may be quasi-collocated with transmit beams used for transmitting one or more SSBs. That two signals are quasi-collocated can mean that the client device 100 can assume that the two signals are transmitted in the same direction (e.g. using the same spatial transmit filter configuration) from the network access node 300.

To evaluate the determined quality of the first transmit beam, the client device 100 compares the quality of the first transmit beam with a first quality threshold value and a second quality threshold value. The first quality threshold value may be associated with the first service type and the second quality threshold value may be associated with the second service type. Furthermore, to evaluate the determined quality of the second transmit beam, the client device 100 compares the quality of the second transmit beam with a third quality threshold value and a fourth quality threshold value. The third quality threshold value may be associated with the first service type and the fourth quality threshold value may be associated with the second service type. In embodiments, the client device 100 may evaluate the quality of the second transmit beam when the quality of the first transmit beam falls below one of the first and second quality threshold values. In other worlds, when the client device 100 wants to identify a suitable second transmit beam to perform beam switching.

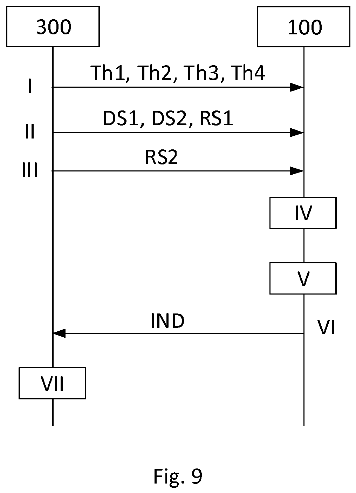

In embodiments, the client device 100 may receive at least one of the first quality threshold value, the second quality threshold value, the third quality threshold value, and the fourth quality threshold value from the network access node 300, as will be described below with reference to Fig. 9. However, the first quality threshold value, the second quality threshold value, the third quality threshold value, and the fourth quality threshold value may in embodiments instead be pre-defined in the client device 100 or obtained from another entity.

According to embodiments of the invention the quality of the first transmit beam may corresponds to a BLER value and at least one of the first quality threshold value and the second quality threshold value may correspond to a BLER value. The BLER value may be a hypothetical PDCCH BLER value. In this case, the client device 100 may maintain different look-up tables containing PDCCH BLER values with respect to measured parameters at the client device 100. The different look-up tables may correspond to different PDCCH BLER curves and these curves may depend on the aggregation levels used for transmitting DCI information, repetition factor, coding scheme, transmission method etc. The measured parameters used for storing the look-up tables of the client device 100 may correspond to reference signal received power (RSRP), reference signal received quality (RSRQ), or signal-to-interference-plus-noise ratio (SINR). Hence, the client device 100 may determine the quality of the first transmit beam by measuring the RSRP, RSRQ, and/or SINR of the first reference signals transmitted in the first transmit beam and map the measured RSRP, RSRQ, and/or SINR to a hypothetical PDCCH BLER value using one or more look-up tables. The determined hypothetical PDCCH BLER value corresponding to the quality of the first transmit beam is then compared to the BLER values corresponding to the first quality threshold value and second quality threshold value, respectively.

In embodiments, RSRP values may be used for the quality and the quality thresholds. In this case, at least one of the first quality threshold value and the second quality threshold value may correspond to a layer 1 RSRP value, and the quality of the first transmit beam may correspond to a layer 1 RSRP value. The layer 1 RSRP value corresponding to the quality of the first transmit beam may be determined by measuring the layer 1 RSRP of the first reference signals transmitted in the first transmit beam. The layer 1 RSRP values corresponding to the first quality threshold value and the second quality threshold value may be determined based on the BLER constraints of the first service type and the second service type, respectively, using the look-up tables.

In a similar way as for the first quality threshold value and the second quality threshold value, the third quality threshold value and the fourth quality threshold value may correspond to BLER values or RSRP values. Hence, at least one of the third quality threshold value and the fourth quality threshold value may correspond to a BLER value, and the quality of the second transmit beam may correspond to a BLER value. Furthermore, at least one of the third quality threshold value and the fourth quality threshold value may correspond to a layer 1 RSRP value, and the quality of the second transmit beam may correspond to a layer 1 RSRP value.

Based on the comparison of the quality of the first transmit beam with the first quality threshold value and the second quality threshold value, and the comparison of the quality of the second transmit beam with the third quality threshold value and the fourth quality threshold value, the client device 100 may transmit an indication associated with reconfiguration of the radio link 502 to the network access node 300. The indication associated with reconfiguration of the radio link 502 may comprise at least one of the quality of the first transmit beam and the quality of the second transmit beam. In this way, the network access node 300 is provided with information about the quality of the first transmit beam and/or the quality of the second transmit beam at the client device 100 and can perform reconfiguration of the radio link 502 based on this information. The indication associated with reconfiguration of the radio link 502 may in embodiments be a random access request. The client device may e.g. use a random access request if PUCCH resources are not configured for transmission of the indication associated with reconfiguration of the radio link 502.

Further details related to the comparison in the client device 100 and the transmission of the indication by the client device 100 will now be described with reference to Figs. 6-8.

Fig. 6 show scenarios for the determined quality of a first transmit beam according to an embodiment of the invention. In the embodiment shown in Fig. 6, the first quality threshold value Th1 and the second quality threshold value Th2, as well as the quality of the first transmit beam, correspond to RSRP values. The first quality threshold value Th1 may be derived from a BLER constraint of the first service type BLER S1 using look-up tables in the client device 100, as previously described and as shown in Fig. 6. In a similar way, the second quality threshold value Th2 may be derived from a BLER constraint of the second service type BLER S2 using look-up tables in the client device 100. In Fig. 6, the control channels associated with the first service type and the second service type, and the first and second quality threshold values Th1, Th2 are such that the quality of the first transmit beam falls below the first quality threshold first, and if the quality of the first transmit beam degrades further, the quality of the first transmit beam falls below the second quality threshold. In other world, the first quality threshold value Th1 is higher than the second quality threshold value Th2 in respect of RSRP value, as shown in Fig. 6.

When the client device 100 compares the quality of the first transmit beam with the first quality threshold value Th1 and the second quality threshold value Th2, the quality of the first transmit beam may be lower than the second threshold value Th2, illustrated with A in Fig. 6; or lower than the first quality threshold value Th1 but higher than the second threshold value Th2, illustrated with B in Fig. 6; or higher than the first quality threshold value Th1, illustrated with C in Fig. 6.

In case A in Fig. 6, the quality of the first transmit beam is too low/poor to support any of the first service type and the second service type. Hence, the client device 100 may declare a beam failure and perform radio link reconfiguration (beam failure recovery) procedure according to conventional solutions. In case B in Fig. 6, when the quality of the first transmit beam is lower than the first quality threshold value Th1 and higher than the second quality threshold value Th2, the client device 100 may transmit an indication associated with reconfiguration of the radio link 502 to the network access node 300 in at least one of physical uplink control channel resources (PUCCH) and random access channel (RACH) resources associated with the first transmit beam. In this case, the quality of the first transmit beam is too low to support the first service type but high enough to support the second service type. The client device 100 transmits the indication using resources associated with the first transmit beam to inform the network access node 300 about the situation. In case C in Fig. 6, no actions are required as the quality of the first transmit beam is high enough to support both the first service type and the second service type.

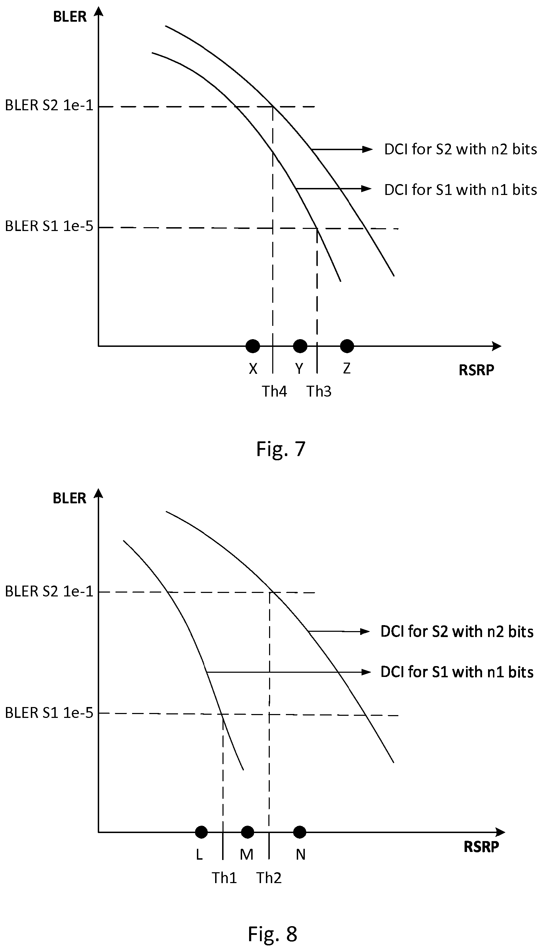

According to embodiments of the invention, the client device 100 further considers the quality of a second transmit beam in deciding when and how an indication associated with reconfiguration of the radio link 502 should be transmitted to the network access node 300. Fig. 7 shows scenarios for the determined quality of a second transmit beam according to embodiments of the invention. In the embodiment shown in Fig. 7, the third quality threshold value Th3 and the fourth quality threshold value Th4, as well as the determined quality of the second transmit beam, corresponds to RSRP values. When the client device 100 compares the quality of the second transmit beam with the third quality threshold value Th3 and the fourth quality threshold value Th4, the quality of the second transmit beam may be lower than the fourth threshold value Th4, illustrated with X in Fig. 7; or lower than the third quality threshold value Th3 but higher than the fourth threshold value Th4, illustrated with Y in Fig. 7; or higher than the third quality threshold value Th3, illustrated with Z in Fig. 7.

Assume case B for the first transmit beam as shown in Fig. 6, i.e. the quality of the first transmit beam is lower than the first quality threshold value Th1 and higher than the second quality threshold value Th2. In other words, the quality of the first transmit beam is too low to support the first service type but high enough to support the second service type. In this case, if the quality of the second transmit beam is lower than the third quality threshold value Th3, i.e. case X or Y in Fig. 7, the client device 100 transmits the indication associated with reconfiguration of the radio link 502 to the network access node 300 using resources associated with the first transmit beam. As the quality of the second transmit beam is not high enough to support the first service type, the second transmit beam is not a suitable candidate transmit beam.

However, when the quality of the first transmit beam is lower than the first quality threshold value Th1 and higher than the second quality threshold value Th2, i.e. case B shown in Fig. 6, and the quality of the second transmit beam is higher than the third quality threshold value Th3, i.e. case Z in Fig. 7, the client device 100 transmits the indication associated with reconfiguration of the radio link 502 to the network access node 300 in at least one of PUCCH and RACH resources associated with the second transmit beam. In this case, the quality of the first transmit beam is too low to support the first service type but the quality of the second transmit beam is high enough to support the first service type. To implicitly indicate that the quality of the second transmit beam is suitable for the first service type, the client device 100 may use resources associated with the second transmit beam based on the determined quality of the second transmit beam to transmit the indication to the network access node 300.

Now assume case A for the first transmit beam as shown in Fig. 6, i.e. the quality of the first transmit beam is lower than the second quality threshold value Th2 and hence also lower than the first quality threshold value Th1. If the quality of the second transmit beam in this case is higher than the fourth quality threshold value Th4, i.e. case Y or Z in Fig. 7, the client device 100 transmits an indication associated with reconfiguration of the radio link 502 to the network access node 300 in RACH associated with the second transmit beam. In this case, the quality of the first transmit beam is too low to support the first service type and the second service type but the quality of the second transmit beam is sufficient to support at least the second service type. To implicitly indicate that the quality of the second transmit beam is high enough for the second service type, the client device 100 may use resources associated with the second transmit beam based on the determined quality of the second transmit beam to transmit the indication to the network access node 300.

As described above, the client device 100 may transmit the indication associated with reconfiguration of the radio link 502 to the network access node 300 in PUCCH resources associated with the first transmit beam or the second transmit beam. That the PUCCH resources are associated with the first transmit beam or the second transmit beam may mean that information transmitted on the PUCCH resources is received by the network access node 300 using a receive beam which is quasi-collocated with the first transmit beam or the second transmit beam, respectively. Furthermore, the PUCCH resources associated with at least one of the first transmit beam and the second transmit beam may be dependent on the determined quality of the first transmit beam and the second transmit beam. For example, there may be two sets of PUCCH resources associated with the second transmit beam to transmit the indication associated with reconfiguration of the radio link 502. A first set of PUCCH resources may be used by the client device 100 if the quality of the second transmit beam is higher than the third quality threshold value Th3, i.e. case Z shown in Fig. 7. Similarly, a second set of PUCCH resources may be used by the client device 100 if the quality of the second transmit beam is lower than the third quality threshold value Th3 and higher than the fourth quality threshold Th4 i.e. case Y shown in Fig. 7. Using this approach, the network access node 300 can implicitly obtain information about the quality of the second transmit beam, and thereby know whether the second transmit beam can support both the first service type and the second service type or only the first service type.

RACH resources associated with the first transmit beam or the second transmit beam may correspond to RACH resources explicitly associated with the first transmit beam or the second transmit beam, respectively, e.g. configured by the network access node 300. In embodiments, the RACH associated with the second transmit beam may be dependent on the determined quality of the second transmit beam. For example, the RACH resources may be divided into a first set of RACH resources and a second set of RACH resources. Depending on the quality of the second transmit beam, the client device 100 may select RACH resources from the first set of RACH resources or the second set of RACH resources. The client device 100 may e.g. select RACH resources from the first set of RACH resources when the quality of the second transmit beam is between the third quality threshold value Th3 and the fourth quality threshold value Th4 and select RACH resources from the second set of RACH resources when the quality of the second transmit beam is above the third quality threshold value Th3.

In the embodiments described with reference to Fig. 6, the control channels associated with the first service type and the second service type, the first quality threshold value Th1, and the second quality threshold value Th2 are such that the quality of the first transmit beam falls below the first quality threshold first. However, in an embodiment the control channels associated with the first service type and the second service type, the first quality threshold value Th1, and the second quality threshold value Th2 may instead be such that the quality of the first transmit beam falls below the second quality threshold first, and if the quality of the first transmit beam degrades further, the quality of the first transmit beam falls below the first quality threshold. In other words, the first quality threshold value Th1 is lower than the second quality threshold value Th2. Fig. 8 show scenarios for the determined quality of a first transmit beam according to such an embodiment.

In the embodiment shown in Fig. 8, the quality of the first transmit beam may be lower than the first threshold value Th1, illustrated with L in Fig. 8; or lower than the second quality threshold value Th2 but higher than the first threshold value Th1, illustrated with M in Fig. 8; or higher than the second quality threshold value Th2, illustrated with N in Fig. 8. In such embodiments, the client device 100 may compare the quality of a second transmit beam with the fourth quality threshold value Th4 only. As the requirements on the quality of a second transmit beam is higher for the second service type than the first service type, any second transmit beam with a quality higher than the fourth quality threshold value Th4 will also be able to support the first service type. Hence, the comparison may in this case result in the quality of the second transmit beam being lower than the fourth quality threshold value Th4 or higher than the fourth threshold value Th4 (not shown in the Figs.).

When the client device 100 determines that the quality of the first transmit beam is lower than the second quality threshold value Th2, i.e. case M or L in Fig. 8, and that the quality of a second transmit beam is higher than the fourth quality threshold value, the client device 100 may initiate beam failure recovery and perform RACH using the resources associated with the second transmit beam.

However, when the client device 100 determines that the quality of the first transmit beam is lower than the second quality threshold value Th2 but higher than the first threshold value Th1, i.e. case M in Fig. 8, the client device 100 may transmit an indication associated with reconfiguration of the radio link 502 in PUCCH resources associated with the first transmit beam. Furthermore, if the client device 100 determines that a second transmit beam exists such that the quality of the second transmit beam is higher than the fourth quality threshold value Th4, the client device 100 may further transmit an indication associated with reconfiguration of the radio link 502 in PUCCH resources associated with the second transmit beam.

According to embodiments of the invention, if any data associated with the first service type arrives during an ongoing beam failure recovery and if the quality of the first transmit beam is higher than the first threshold value Th1, i.e. case M or N in Fig. 8, the client device 100 may transmit the data associated with the first service type while the RACH procedure associated with beam failure recovery is ongoing. Furthermore, if the resources associated with data corresponding to the first service type are in the same slot as the RACH occasion associated with beam failure recovery, data transmission corresponding to the first service type may be given higher priority than RACH for beam failure recovery. In this way, QoS requirements of the first service type can be met.

Fig. 9 shows signaling between a client device 100 and a network access node 300 according to an embodiment of the invention. In the embodiment shown in Fig. 9, the network access node 300 is connected to the client device 100 over a radio link 502. The network access node 300 configures two or more quality threshold values for the client device 100 which the client device 100 uses to evaluate the quality of transmit beams from the network access node 300 and to determine whether to transmit an indication associated with reconfiguration of the radio link 502 to the network access node 300 or not. The quality threshold values may e.g. be pre-defined in a standard. In this case, the network access node 300 obtains the quality threshold values from the standard. However, the network access node 300 may obtain the quality threshold values in other ways without deviating from the scope of the invention.

Furthermore, the network access node 300 may configure the quality threshold values separately or the network access node 300 may configure one or more quality threshold values using a differential approach. For example, the network access node 300 may configure a second quality threshold value and configure a delta value such that a first quality threshold value may be derived by adding or subtracting the delta value to/from the second quality threshold value.

In the embodiment shown in Fig. 9, the network access node 300 configures the client device 100 with a first quality threshold value, a second quality threshold value, a third quality threshold value, and a fourth quality threshold value. The first quality threshold value and the second quality threshold value are used to evaluate the quality of a first transmit beam from the network node 300, while the third quality threshold value and the fourth quality threshold value are used to evaluate the quality of a second transmit beam from the network node 300 as previously described. The first transmit beam is a serving transmit beam used by the network access node 300 to transmit data associated with a first service type and data associated with a second service type to the client device 100. The second transmit beam is a possible candidate beam.

In step I in Fig. 9, the network access node 300 transmits the first quality threshold value Th1, the second quality threshold value Th2, the third quality threshold value Th3, and the fourth quality threshold value Th4 to the client device 100. The network access node 300 may transmit the quality threshold values using higher layer signalling, such as e.g. radio resource control (RRC) signalling. The first quality threshold value Th1 and the third quality threshold value Th 3 are associated with the first service type, while the second quality threshold value Th2 and the fourth quality threshold value Th4 are associated with the second service type. The client device 100 receives the first quality threshold value Th1, the second quality threshold value Th2, the third quality threshold value Th3, and the fourth quality threshold value Th4 from the network access node 300.

The network access node 300 further transmits data DS1 associated with the first service type, data DS2 associated with the second service type, and a first reference signal RS1 in the first transmit beam to the client device 100 over the radio link 502, i.e. in the same transmit beam, as shown in step II in Fig. 9. Data DS1 associated with the first service type, data DS2 associated with the second service type, and the first reference signal RS1 may be transmitted by the network access node 300 aperiodically or periodically and in any order.

In addition, the network access node 300 transmits one or more second reference signals RS2 in the second transmit beam to the client device 100 over the radio link 502, as shown in step III in Fig. 9. As previously described, the second reference signal is transmitted by the network access node 300 to allow the client device 100 to identify a suitable candidate transmit beam.

In Fig. 9, step I, II, and III are shown to be performed one after the other in a sequential order, starting with step I. However, step I, II, and III may be performed in any order and at any time without deviating from the scope of the invention.

In step IV in Fig. 9, the client device 100 determines the quality of the first transmit beam based on the received first reference signal RS1, as well as the quality of the second transmit beam based on the received second reference signal RS2. The client device 100 further compares the quality of the first transmit beam with the first quality threshold value Th1 and the second quality threshold value Th2; and the quality of the second transmit beam with the third quality threshold value Th3 and the fourth quality threshold value Th4 in step V in Fig. 9.

Based on the comparison in step V, the client device 100 transmits an indication IND associated with reconfiguration of the radio link 502 to the network access node 300, as shown in step VI in Fig. 9. The indication IND may be transmitted in PUCCH resource or RACH resources associated with the first transmit beam or the second transmit beam, as previously described.

The network access node 300 receives the indication IND associated with reconfiguration of the radio link 502 from the client device 100, where the indication IND associated with reconfiguration of the radio link 502 is based on the first quality threshold value Th1, the second quality threshold value Th2, third quality threshold value Th3, the fourth quality threshold value Th4, the first reference signal RS1, and the second reference signal RS2. In step VII in Fig. 9, the network access node 300 performs reconfiguration of the radio link 502 to the client device 100 based on the received indication IND associated with reconfiguration of the radio link 502.

According to embodiments of the invention step VII may comprise the network access node 300 switching transmission of data associated with at least one of the first service type and the second service type from the first transmit beam to the second transmit beam. Furthermore, step IV may comprise the network access node 300 scheduling transmission of a third reference signal in the second transmit beam to the client device 100 over the radio link 502. The third reference signals are used by the client device 100 to determine the quality of the second transmit beam. The determined quality of the second transmit beam is compared by the client device 100 with the first quality threshold value and the second quality threshold value, as the second transmit beam after the switch becomes the serving transmit beam, i.e. the transmit beam over which data associated with the first service type and data associated with the second service type are transmitted to the client device 100. The network access node 300 further informs the client device 100 about the switch to the second transmit beam (not shown in Fig. 9) and continues transmission of data associated with the first service type and data associated with the second service type to the client device 100.

The client device 100 herein, may be denoted as a user device, a User Equipment (UE), a mobile station, an internet of things (IoT) device, a sensor device, a wireless terminal and/or a mobile terminal, is enabled to communicate wirelessly in a wireless communication system, sometimes also referred to as a cellular radio system. The UEs may further be referred to as mobile telephones, cellular telephones, computer tablets or laptops with wireless capability. The UEs in this context may be, for example, portable, pocket-storable, hand-held, computer-comprised, or vehicle-mounted mobile devices, enabled to communicate voice and/or data, via the radio access network, with another entity, such as another receiver or a server. The UE can be a Station (STA), which is any device that contains an IEEE 802.11-conformant Media Access Control (MAC) and Physical Layer (PHY) interface to the Wireless Medium (WM). The UE may also be configured for communication in 3GPP related LTE and LTE-Advanced, in WiMAX and its evolution, and in fifth generation wireless technologies, such as New Radio.

The network access node 300 herein may also be denoted as a radio network access node, an access network access node, an access point, or a base station, e.g. a Radio Base Station (RBS), which in some networks may be referred to as transmitter, "gNB", "gNodeB", "eNB", "eNodeB", "NodeB" or "B node", depending on the technology and terminology used. The radio network access nodes may be of different classes such as e.g. macro eNodeB, home eNodeB or pico base station, based on transmission power and thereby also cell size. The radio network access node can be a Station (STA), which is any device that contains an IEEE 802.11-conformant Media Access Control (MAC) and Physical Layer (PHY) interface to the Wireless Medium (WM). The radio network access node may also be a base station corresponding to the fifth generation (5G) wireless systems.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the client device 100 and the network access node 300 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Especially, the processor(s) of the client device 100 and the network access node 300 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

Finally, it should be understood that the invention is not limited to the embodiments described above, but also relates to and incorporates all embodiments within the scope of the appended independent claims.

## Claims

1. A client device (100), the client device (100) being configured to
receive data associated with a first service type, data associated with a second service type, and a first reference signal all transmitted in a first transmit beam from a network access node (300) over a radio link (502);
determine a quality of the first transmit beam based on the received first reference signal;
compare the quality of the first transmit beam with a first quality threshold value and a second quality threshold value, wherein the first quality threshold value is associated with the first service type and the second quality threshold value is associated with the second service type, and wherein the first quality threshold value is higher than the second quality threshold value;
transmit an indication associated with reconfiguration of the radio link (502) to the network access node (300) based on the comparison of the quality of the first transmit beam with the first quality threshold value and the second quality threshold value;
receive a second reference signal transmitted in a second transmit beam from the network access node (300) over the radio link (502);
determine a quality of the second transmit beam based on the received second reference signal; and
compare the quality of the second transmit beam with a third quality threshold value and a fourth quality threshold value, wherein the third quality threshold value is associated with the first service type and the fourth quality threshold value is associated with the second service type, and wherein the third quality threshold value is higher than the fourth quality threshold value; and
transmit the indication to the network access node (300) further based on the comparison of the quality of the second transmit beam with the third quality threshold value and the fourth quality threshold value; and
**characterized in that** the client device is further configured to,
when the quality of the first transmit beam is lower than the first quality threshold value and higher than the second quality threshold value, and the quality of the second transmit beam is lower than the third quality threshold value, transmit the indication associated with reconfiguration of the radio link (502) using resources associated with the first transmit beam; and
when the quality of the first transmit beam is lower than the first quality threshold value and higher than the second quality threshold value and the quality of the second transmit beam is higher than the third quality threshold value, transmit the indication associated with reconfiguration of the radio link (502) in at least one of physical uplink control channel resources and random access channel resources associated with the second transmit beam; and
when the quality of the first transmit beam is lower than the second quality threshold value and the quality of the second transmit beam is higher than the fourth quality threshold value, transmit the indication associated with reconfiguration of the radio link (502) in random access channel resources associated with the second transmit beam.

2. The client device (100) according to claim 1, wherein at least one of the first quality threshold value and the second quality threshold value corresponds to a block error rate value, and wherein the quality of the first transmit beam corresponds to a block error rate value.

3. The client device (100) according to claim 1, wherein at least one of the first quality threshold value and the second quality threshold value corresponds to a layer 1 reference signal received power value, and wherein the quality of the first transmit beam corresponds to a layer 1 reference signal received power value.

4. The client device (100) according to any one of claims 1 to 3, wherein at least one of the third quality threshold value and the fourth quality threshold value corresponds to a layer 1 reference signal received power value, and wherein the quality of the second transmit beam corresponds to a layer 1 reference signal received power value.

5. The client device (100) according to any one of claims 1 to 4, wherein the random access channel resources associated with the second transmit beam are dependent on the determined quality of the second transmit beam.

6. The client device (100) according to any one of claims 1 to 5, wherein the physical uplink control channel resources associated with at least one of the first transmit beam and the second transmit beam are dependent on the determined quality of the first transmit beam and the second transmit beam.

7. A network access node (300), the network access node (300) being configured to
transmit a first quality threshold value and a second quality threshold value to the client device (100), wherein the first quality threshold value is associated with a first service type and the second quality threshold value is associated with a second service type;
transmit a third quality threshold value and a fourth quality threshold value to the client device (100), wherein the third quality threshold value is associated with the first service type and the fourth quality threshold value is associated with the second service type;
transmit data associated with the first service type, data associated with the second service type, and a first reference signal in a first transmit beam to a client device (100) over a radio link (502);
transmit a second reference signal in a second transmit beam to the client device (100) over the radio link (502);
receive an indication associated with reconfiguration of the radio link (502) from the client device (100); and
perform reconfiguration of the radio link (502) to the client device (100) based on the received indication associated with reconfiguration of the radio link (502); and
**characterized in that** the network access node is further configured to,
when a quality of the first transmit beam is lower than the first quality threshold value and higher than the second quality threshold value, and a quality of the second transmit beam is lower than the third quality threshold value, the indication associated with reconfiguration of the radio link (502) is received using resources associated with the first transmit beam; and
when the quality of the first transmit beam is lower than the first quality threshold value and higher than the second quality threshold value and the quality of the second transmit beam is higher than the third quality threshold value, the indication associated with reconfiguration of the radio link (502) is received in at least one of physical uplink control channel resources and random access channel resources associated with the second transmit beam; and
when the quality of the first transmit beam is lower than the second quality threshold value and the quality of the second transmit beam is higher than the fourth quality threshold value, the indication associated with reconfiguration of the radio link (502) is received in random access channel resources associated with the second transmit beam.

8. A method (200) for a client device (100), the method (200) comprises
receiving (202) data associated with a first service type, data associated with a second service type, and a first reference signal all transmitted in a first transmit beam from a network access node (300) over a radio link (502);
determining (204) a quality of the first transmit beam based on the received first reference signal;
comparing (206) the quality of the first transmit beam with a first quality threshold value and a second quality threshold value, wherein the first quality threshold value is associated with the first service type and the second quality threshold value is associated with the second service type, and wherein the first quality threshold value is higher than the second quality threshold value;
transmitting (208) an indication associated with reconfiguration of the radio link (502) to the network access node (300) based on the comparison of the quality of the first transmit beam with the first quality threshold value and the second quality threshold value;
receiving a second reference signal transmitted in a second transmit beam from the network access node (300) over the radio link (502);
determining a quality of the second transmit beam based on the received second reference signal; and
comparing the quality of the second transmit beam with a third quality threshold value and a fourth quality threshold value, wherein the third quality threshold value is associated with the first service type and the fourth quality threshold value is associated with the second service type, and wherein the third quality threshold value is higher than the fourth quality threshold value; and
transmitting the indication to the network access node (300) further based on the comparison of the quality of the second transmit beam with the third quality threshold value and the fourth quality threshold value; and
**characterized in that** the method further comprises
when the quality of the first transmit beam is lower than the first quality threshold value and higher than the second quality threshold value, and the quality of the second transmit beam is lower than the third quality threshold value, transmitting the indication associated with reconfiguration of the radio link (502) using resources associated with the first transmit beam; and
when the quality of the first transmit beam is lower than the first quality threshold value and higher than the second quality threshold value and the quality of the second transmit beam is higher than the third quality threshold value, transmitting the indication associated with reconfiguration of the radio link (502) in at least one of physical uplink control channel resources and random access channel resources associated with the second transmit beam; and
when the quality of the first transmit beam is lower than the second quality threshold value and the quality of the second transmit beam is higher than the fourth quality threshold value, transmitting the indication associated with reconfiguration of the radio link (502) in random access channel resources associated with the second transmit beam.

9. A method (400) for a network access node (300), the method (400) comprises
transmitting (402) a first quality threshold value and a second quality threshold value to the client device (100), wherein the first quality threshold value is associated with a first service type and the second quality threshold value is associated with a second service type;
transmitting a third quality threshold value and a fourth quality threshold value to the client device (100), wherein the third quality threshold value is associated with the first service type and the fourth quality threshold value is associated with the second service type;
transmitting (404) data associated with the first service type, data associated with the second service type, and a first reference signal in a first transmit beam to a client device (100) over a radio link (502);
transmitting a second reference signal in a second transmit beam to the client device (100) over the radio link (502);
receiving (406) an indication associated with reconfiguration of the radio link (502) from the client device (100); and
performing (408) reconfiguration of the radio link (502) to the client device (100) based on the received indication associated with reconfiguration of the radio link (502);
**characterized in that** the method further comprises:
when a quality of the first transmit beam is lower than the first quality threshold value and higher than the second quality threshold value, and a quality of the second transmit beam is lower than the third quality threshold value, receiving the indication associated with reconfiguration of the radio link (502) using resources associated with the first transmit beam; and
when the quality of the first transmit beam is lower than the first quality threshold value and higher than the second quality threshold value and the quality of the second transmit beam is higher than the third quality threshold value, receiving the indication associated with reconfiguration of the radio link (502) in at least one of physical uplink control channel resources and random access channel resources associated with the second transmit beam; and
when the quality of the first transmit beam is lower than the second quality threshold value and the quality of the second transmit beam is higher than the fourth quality threshold value, receiving the indication associated with reconfiguration of the radio link (502) in random access channel resources associated with the second transmit beam.

10. A computer program with a program code which, when executed by a computer in a client device, causes the client device to perform a method according to claim 8.

11. A computer program with a program code which, when executed by a computer in a network access node, causes the network access node to perform a method according to claim 9.

12. A wireless communication system (500), comprising the client device (100) according to any one of claims 1-6, and the network access node (300) according to claim 7.

## Patentansprüche

1. Client-Vorrichtung (100), wobei die Client-Vorrichtung (100) zu Folgendem konfiguriert ist:
Empfangen von Daten, die einem ersten Diensttyp zugeordnet sind, Daten, die einem zweiten Diensttyp zugeordnet sind, und eines ersten Referenzsignals, die alle in einem ersten Übertragungsstrahl von einem Netzzugangsknoten (300) über eine Funkverbindung (502) übertragen werden;
Bestimmen einer Qualität des ersten Übertragungsstrahls basierend auf dem empfangenen ersten Referenzsignal;
Vergleichen der Qualität des ersten Übertragungsstrahls mit einem ersten Qualitätsschwellenwert und einem zweiten Qualitätsschwellenwert, wobei der erste Qualitätsschwellenwert dem ersten Diensttyp zugeordnet ist und der zweite Qualitätsschwellenwert dem zweiten Diensttyp zugeordnet ist und wobei der erste Qualitätsschwellenwert über dem zweiten Qualitätsschwellenwert liegt;
Übertragen einer Angabe, die einer Rekonfiguration der Funkverbindung (502) mit dem Netzzugangsknoten (300) zugeordnet ist, basierend auf dem Vergleich der Qualität des ersten Übertragungsstrahls mit dem ersten Qualitätsschwellenwert und dem zweiten Qualitätsschwellenwert;
Empfangen eines zweiten Referenzsignals, das in einem zweiten Übertragungsstrahl von dem Netzzugangsknoten (300) über die Funkverbindung (502) übertragen wird;
Bestimmen einer Qualität des zweiten Übertragungsstrahls basierend auf dem empfangenen zweiten Referenzsignal; und
Vergleichen der Qualität des zweiten Übertragungsstrahls mit einem dritten Qualitätsschwellenwert und einem vierten Qualitätsschwellenwert, wobei der dritte Qualitätsschwellenwert dem ersten Diensttyp zugeordnet ist und der vierte Qualitätsschwellenwert dem zweiten Diensttyp zugeordnet ist und wobei der dritte Qualitätsschwellenwert über dem zweiten Qualitätsschwellenwert liegt; und
Übertragen der Angabe an den Netzzugangsknoten (300) ferner basierend auf dem Vergleich der Qualität des zweiten Übertragungsstrahls mit dem dritten Qualitätsschwellenwert und dem vierten Qualitätsschwellenwert; und
**dadurch gekennzeichnet, dass** die Client-Vorrichtung ferner zu Folgendem konfiguriert ist:
wenn die Qualität des ersten Übertragungsstrahls unter dem ersten Qualitätsschwellenwert und über dem zweiten Qualitätsschwellenwert liegt und die Qualität des zweiten Übertragungsstrahls unter dem dritten Qualitätsschwellenwert liegt, Übertragen der Angabe, die der Rekonfiguration der Funkverbindung (502) zugeordnet ist, unter Verwendung von Ressourcen, die dem ersten Übertragungsstrahl zugeordnet sind; und
wenn die Qualität des ersten Übertragungsstrahls unter dem ersten Qualitätsschwellenwert und über dem zweiten Qualitätsschwellenwert liegt und die Qualität des zweiten Übertragungsstrahls über dem dritten Qualitätsschwellenwert liegt, Übertragen der Angabe, die der Rekonfiguration der Funkverbindung (502) zugeordnet ist, in mindestens einem von Ressourcen eines Physical Uplink Control Channel und Ressourcen eines Random Access Channel, die dem zweiten Übertragungsstrahl zugeordnet sind; und
wenn die Qualität des ersten Übertragungsstrahls unter dem zweiten Qualitätsschwellenwert liegt und die Qualität des zweiten Übertragungsstrahls über dem vierten Qualitätsschwellenwert liegt, Übertragen der Angabe, die der Rekonfiguration der Funkverbindung (502) zugeordnet ist, in Ressourcen eines Random Access Channel, die dem zweiten Übertragungsstrahl zugeordnet sind.

2. Client-Vorrichtung (100) nach Anspruch 1, wobei mindestens einer des ersten Qualitätsschwellenwerts und des zweite Qualitätsschwellenwerts einem Blockfehlerratenwert entspricht und wobei die Qualität des ersten Übertragungsstrahls einem Blockfehlerratenwert entspricht.

3. Client-Vorrichtung (100) nach Anspruch 1, wobei mindestens einer des ersten Qualitätsschwellenwerts und des zweite Qualitätsschwellenwerts einem Wert einer Leistungsaufnahme des Referenzsignals der 1. Ebene entspricht und wobei die Qualität des ersten Übertragungsstrahls einem Wert einer Leistungsaufnahme des Referenzsignals der 1. Ebene entspricht.

4. Client-Vorrichtung (100) nach einem der Ansprüche 1 bis 3, wobei mindestens einer des dritten Qualitätsschwellenwerts und des vierten Qualitätsschwellenwerts einem Wert einer Leistungsaufnahme des Referenzsignals der 1. Ebene entspricht und wobei die Qualität des zweiten Übertragungsstrahls einem Wert einer Leistungsaufnahme des Referenzsignals der 1. Ebene entspricht.

5. Client-Vorrichtung (100) nach einem der Ansprüche 1 bis 4, wobei die dem zweiten Übertragungsstrahl zugeordneten Ressourcen des Random Access Channel von der bestimmten Qualität des zweiten Übertragungsstrahls abhängig sind.

6. Client-Vorrichtung (100) nach einem der Ansprüche 1 bis 5, wobei die Ressourcen eines Physical Uplink Control Channel, die mindestens einem von dem ersten Übertragungsstrahl und dem zweiten Übertragungsstrahl zugeordnet sind, von der bestimmten Qualität des ersten Übertragungsstrahls und des zweiten Übertragungsstrahls abhängig sind.

7. Netzzugangsknoten (300), wobei der Netzzugangsknoten (300) zu Folgendem konfiguriert ist:
Übertragen eines ersten Qualitätsschwellenwerts und eines zweiten Qualitätsschwellenwerts an die Client-Vorrichtung (100), wobei der erste Qualitätsschwellenwert einem ersten Diensttyp zugeordnet ist und der zweite Qualitätsschwellenwert einem zweiten Diensttyp zugeordnet ist;
Übertragen eines dritten Qualitätsschwellenwerts und eines vierten Qualitätsschwellenwerts an die Client-Vorrichtung (100), wobei der dritte Qualitätsschwellenwert dem ersten Diensttyp zugeordnet ist und der vierte Qualitätsschwellenwert dem zweiten Diensttyp zugeordnet ist;
Übertragen von Daten, die dem ersten Diensttyp zugeordnet sind, Daten, die dem zweiten Diensttyp zugeordnet sind, und eines ersten Referenzsignals in einem ersten Übertragungsstrahl über eine Funkverbindung (502) an eine Client-Vorrichtung (100);
Übertragen eines zweiten Referenzsignals in einem zweiten Übertragungsstrahl über die Funkverbindung (502) an die Client-Vorrichtung (100);
Empfangen einer Angabe, die einer Rekonfiguration der Funkverbindung (502) zugeordnet ist, von der Client-Vorrichtung (100); und
Durchführen der Rekonfiguration der Funkverbindung (502) mit der Client-Vorrichtung (100) basierend auf der empfangenen Angabe, die der Rekonfiguration der Funkverbindung (502) zugeordnet ist; und
**dadurch gekennzeichnet, dass** der Netzzugangsknoten ferner zu Folgendem konfiguriert ist:
wenn eine Qualität des ersten Übertragungsstrahls unter dem zweiten Qualitätsschwellenwert liegt und über dem zweiten Qualitätsschwellenwert liegt und eine Qualität des zweiten Übertragungsstrahls unter dem dritten Qualitätsschwellenwert liegt, wird die Angabe, die der Rekonfiguration der Funkverbindung (502) zugeordnet ist, unter Verwendung von Ressourcen empfangen, die dem ersten Übertragungsstrahl zugeordnet sind; und
wenn die Qualität des ersten Übertragungsstrahls unter dem ersten Qualitätsschwellenwert und über dem zweiten Qualitätsschwellenwert liegt und die Qualität des zweiten Übertragungsstrahls über dem dritten Qualitätsschwellenwert liegt, wird die Angabe, die der Rekonfiguration der Funkverbindung (502) zugeordnet ist, in mindestens einem von Ressourcen des Physical Uplink Control Channel und Ressourcen des Random Access Channel empfangen, die dem zweiten Übertragungsstrahl zugeordnet sind; und
wenn die Qualität des ersten Übertragungsstrahls unter dem ersten Qualitätsschwellenwert liegt und die Qualität des zweiten Übertragungsstrahls über dem vierten Qualitätsschwellenwert liegt, wird die Angabe, die der Rekonfiguration der Funkverbindung (502) zugeordnet ist, in Ressourcen des Random Access Channel empfangen, die dem zweiten Übertragungsstrahl zugeordnet sind.

8. Verfahren (200) für eine Client-Vorrichtung (100), wobei das Verfahren (200) Folgendes umfasst:
Empfangen (202) von Daten, die einem ersten Diensttyp zugeordnet sind, Daten, die einem zweiten Diensttyp zugeordnet sind, und eines ersten Referenzsignals, die alle in einem ersten Übertragungsstrahl von einem Netzzugangsknoten (300) über eine Funkverbindung (502) übertragen werden;
Bestimmen (204) einer Qualität des ersten Übertragungsstrahls basierend auf dem empfangenen ersten Referenzsignal;
Vergleichen (206) der Qualität des ersten Übertragungsstrahls mit einem ersten Qualitätsschwellenwert und einem zweiten Qualitätsschwellenwert, wobei der erste Qualitätsschwellenwert dem ersten Diensttyp zugeordnet ist und der zweite Qualitätsschwellenwert dem zweiten Diensttyp zugeordnet ist und wobei der erste Qualitätsschwellenwert über dem zweiten Qualitätsschwellenwert liegt;
Übertragen (208) einer Angabe, die einer Rekonfiguration der Funkverbindung (502) mit dem Netzzugangsknoten (300) zugeordnet ist, basierend auf dem Vergleich der Qualität des ersten Übertragungsstrahls mit dem ersten Qualitätsschwellenwert und dem zweiten Qualitätsschwellenwert;
Empfangen eines zweiten Referenzsignals, das in einem zweiten Übertragungsstrahl von dem Netzzugangsknoten (300) über die Funkverbindung (502) übertragen wird;
Bestimmen einer Qualität des zweiten Übertragungsstrahls basierend auf dem empfangenen zweiten Referenzsignal; und
Vergleichen der Qualität des zweiten Übertragungsstrahls mit einem dritten Qualitätsschwellenwert und einem vierten Qualitätsschwellenwert, wobei der dritte Qualitätsschwellenwert dem ersten Diensttyp zugeordnet ist und der vierte Qualitätsschwellenwert dem zweiten Diensttyp zugeordnet ist und wobei der dritte Qualitätsschwellenwert über dem zweiten Qualitätsschwellenwert liegt; und
Übertragen der Angabe Netzzugangsknoten (300) ferner basierend auf dem Vergleich der Qualität des zweiten Übertragungsstrahls mit dem dritten Qualitätsschwellenwert und dem vierten Qualitätsschwellenwert; und
**dadurch gekennzeichnet, dass** das Verfahren ferner Folgendes umfasst
wenn die Qualität des ersten Übertragungsstrahls unter dem ersten Qualitätsschwellenwert und über dem zweiten Qualitätsschwellenwert liegt und die Qualität des zweiten Übertragungsstrahls unter dem dritten Qualitätsschwellenwert liegt, Übertragen der Angabe, die der Rekonfiguration der Funkverbindung (502) zugeordnet ist, unter Verwendung von Ressourcen, die dem ersten Übertragungsstrahl zugeordnet sind; und
wenn die Qualität des ersten Übertragungsstrahls unter dem ersten Qualitätsschwellenwert und über dem zweiten Qualitätsschwellenwert liegt und die Qualität des zweiten Übertragungsstrahls über dem dritten Qualitätsschwellenwert liegt, Übertragen der Angabe, die der Rekonfiguration der Funkverbindung (502) zugeordnet ist, in mindestens einem von Ressourcen eines Physical Uplink Control Channel und Ressourcen eines Random Access Channel, die dem zweiten Übertragungsstrahl zugeordnet sind; und
wenn die Qualität des ersten Übertragungsstrahls unter dem zweiten Qualitätsschwellenwert liegt und die Qualität des zweiten Übertragungsstrahls über dem vierten Qualitätsschwellenwert liegt, Übertragen der Angabe, die der Rekonfiguration der Funkverbindung (502) zugeordnet ist, in Ressourcen eines Random Access Channel, die dem zweiten Übertragungsstrahl zugeordnet sind.

9. Verfahren (400) für einen Netzzugangsknoten (300), wobei das Verfahren (400) Folgendes umfasst:
Übertragen (402) eines ersten Qualitätsschwellenwerts und eines zweiten Qualitätsschwellenwerts an die Client-Vorrichtung (100), wobei der erste Qualitätsschwellenwert einem ersten Diensttyp zugeordnet ist und der zweite Qualitätsschwellenwert einem zweiten Diensttyp zugeordnet ist;
Übertragen eines dritten Qualitätsschwellenwerts und eines vierten Qualitätsschwellenwerts an die Client-Vorrichtung (100), wobei der dritte Qualitätsschwellenwert dem ersten Diensttyp zugeordnet ist und der vierte Qualitätsschwellenwert dem zweiten Diensttyp zugeordnet ist;
Übertragen (404) von Daten, die dem ersten Diensttyp zugeordnet sind, Daten, die dem zweiten Diensttyp zugeordnet sind, und eines ersten Referenzsignals in einem ersten Übertragungsstrahl über eine Funkverbindung (502) an eine Client-Vorrichtung (100);
Übertragen eines zweiten Referenzsignals in einem zweiten Übertragungsstrahl über die Funkverbindung (502) an die Client-Vorrichtung (100);
Empfangen (406) einer Angabe, die einer Rekonfiguration der Funkverbindung (502) zugeordnet ist, von der Client-Vorrichtung (100); und
Durchführen (408) der Rekonfiguration der Funkverbindung (502) mit der Client-Vorrichtung (100) basierend auf der empfangenen Angabe, die der Rekonfiguration der Funkverbindung (502) zugeordnet ist;
**dadurch gekennzeichnet, dass** das Verfahren ferner Folgendes umfasst:
wenn eine Qualität des ersten Übertragungsstrahls unter dem zweiten Qualitätsschwellenwert liegt und über dem zweiten Qualitätsschwellenwert liegt und eine Qualität des zweiten Übertragungsstrahls unter dem dritten Qualitätsschwellenwert liegt, Empfangen der Angabe, die der Rekonfiguration der Funkverbindung (502) zugeordnet ist, unter Verwendung von Ressourcen, die dem ersten Übertragungsstrahl zugeordnet sind; und
wenn die Qualität des ersten Übertragungsstrahls unter dem ersten Qualitätsschwellenwert und über dem zweiten Qualitätsschwellenwert liegt und die Qualität des zweiten Übertragungsstrahls über dem dritten Qualitätsschwellenwert liegt, Empfangen der Angabe, die der Rekonfiguration der Funkverbindung (502) zugeordnet ist, in mindestens einem von Ressourcen des Physical Uplink Control Channel und Ressourcen des Random Access Channel, die dem zweiten Übertragungsstrahl zugeordnet sind; und
wenn die Qualität des ersten Übertragungsstrahls unter dem ersten Qualitätsschwellenwert liegt und die Qualität des zweiten Übertragungsstrahls über dem vierten Qualitätsschwellenwert liegt, Empfangen der Angabe, die der Rekonfiguration der Funkverbindung (502) zugeordnet ist, in Ressourcen des Random Access Channel, die dem zweiten Übertragungsstrahl zugeordnet sind.

10. Computerprogramm mit einem Programmcode, der, wenn er durch einen Computer in einer Client-Vorrichtung ausgeführt wird, die Client-Vorrichtung dazu veranlasst, ein Verfahren nach Anspruch 8 durchzuführen.

11. Computerprogramm mit einem Programmcode, der, wenn er durch einen Computer in einem Netzzugangsknoten ausgeführt wird, den Netzzugangsknoten dazu veranlasst, ein Verfahren nach Anspruch 9 durchzuführen.

12. Drahtloses Kommunikationssystem (500), umfassend die Client-Vorrichtung (100) nach einem der Ansprüche 1-6 und den Netzzugangsknoten (300) nach Anspruch 7.

## Revendications

1. Dispositif client (100), le dispositif client (100) étant configuré pour
recevoir des données associées à un premier type de service, des données associées à un second type de service et un premier signal de référence, le tout transmis dans un premier faisceau d'émission à partir d'un nœud d'accès au réseau (300) via une liaison radio (502) ;
déterminer la qualité du premier faisceau d'émission sur la base du premier signal de référence reçu ;
comparer la qualité du premier faisceau d'émission avec une première valeur seuil de qualité et une deuxième valeur seuil de qualité, dans lequel la première valeur seuil de qualité est associée au premier type de service et la deuxième valeur seuil de qualité est associée au second type de service, et dans lequel la première valeur seuil de qualité est supérieure à la deuxième valeur seuil de qualité ;
transmettre une indication associée à la reconfiguration de la liaison radio (502) au nœud d'accès au réseau (300) sur la base de la comparaison de la qualité du premier faisceau d'émission avec la première valeur seuil de qualité et la deuxième valeur seuil de qualité ;
recevoir un second signal de référence transmis dans un second faisceau d'émission depuis le nœud d'accès au réseau (300) via la liaison radio (502) ;
déterminer la qualité du second faisceau d'émission sur la base du second signal de référence reçu ; et
comparer la qualité du second faisceau d'émission avec une troisième valeur seuil de qualité et une quatrième valeur seuil de qualité, dans lequel la troisième valeur seuil de qualité est associée au premier type de service et la quatrième valeur seuil de qualité est associée au second type de service, et dans lequel la troisième valeur seuil de qualité est supérieure à la quatrième valeur seuil de qualité ; et
transmettre l'indication au nœud d'accès au réseau (300) sur la base en outre de la comparaison de la qualité du second faisceau d'émission avec la troisième valeur seuil de qualité et la quatrième valeur seuil de qualité ; et
**caractérisé en ce que** le dispositif client est en outre configuré pour,
lorsque la qualité du premier faisceau d'émission est inférieure à la première valeur seuil de qualité et supérieure à la deuxième valeur seuil de qualité, et que la qualité du second faisceau d'émission est inférieure à la troisième valeur seuil de qualité, transmettre l'indication associée à la reconfiguration de la liaison radio (502) en utilisant les ressources associées au premier faisceau d'émission ; et
lorsque la qualité du premier faisceau d'émission est inférieure à la première valeur seuil de qualité et supérieure à la deuxième valeur seuil de qualité, et que la qualité du second faisceau d'émission est supérieure à la troisième valeur seuil de qualité, transmettre l'indication associée à la reconfiguration de la liaison radio (502) dans au moins l'une des ressources de canal de commande de liaison montante physique et des ressources de canal d'accès aléatoire associées au second faisceau d'émission ; et
lorsque la qualité du premier faisceau d'émission est inférieure à la deuxième valeur seuil de qualité et que la qualité du second faisceau d'émission est supérieure à la quatrième valeur seuil de qualité, transmettre l'indication associée à la reconfiguration de la liaison radio (502) dans les ressources de canal d'accès aléatoire associées au second faisceau d'émission.

2. Dispositif client (100) selon la revendication 1, dans lequel au moins l'une de la première valeur seuil de qualité et de la deuxième valeur seuil de qualité correspond à une valeur de taux d'erreur de bloc, et dans lequel la qualité du premier faisceau d'émission correspond à une valeur de taux d'erreur de bloc.

3. Dispositif client (100) selon la revendication 1, dans lequel au moins l'une de la première valeur seuil de qualité et de la deuxième valeur seuil de qualité correspond à une valeur de puissance reçue d'un signal de référence de couche 1, et dans lequel la qualité du premier faisceau d'émission correspond à une valeur de puissance reçue d'un signal de référence de couche 1.

4. Dispositif client (100) selon l'une quelconque des revendications 1 à 3, dans lequel au moins l'une de la troisième valeur seuil de qualité et de la quatrième valeur seuil de qualité correspond à une valeur de puissance reçue d'un signal de référence de couche 1, et dans lequel la qualité du second faisceau d'émission correspond à une valeur de puissance reçue d'un signal de référence de couche 1.

5. Dispositif client (100) selon l'une quelconque des revendications 1 à 4, dans lequel les ressources de canal d'accès aléatoire associées au second faisceau d'émission dépendent de la qualité déterminée du second faisceau d'émission.

6. Dispositif client (100) selon l'une quelconque des revendications 1 à 5, dans lequel les ressources de canal de commande de liaison montante physique associées à au moins l'un du premier faisceau d'émission et du second faisceau d'émission dépendent de la qualité déterminée du premier faisceau d'émission et du second faisceau d'émission.

7. Nœud d'accès au réseau (300), le nœud d'accès au réseau (300) étant configuré pour
transmettre une première valeur seuil de qualité et une deuxième valeur seuil de qualité au dispositif client (100), dans lequel la première valeur seuil de qualité est associée à un premier type de service et la deuxième valeur seuil de qualité est associée à un second type de service ;
transmettre une troisième valeur seuil de qualité et une quatrième valeur seuil de qualité au dispositif client (100), dans lequel la troisième valeur seuil de qualité est associée au premier type de service et la quatrième valeur seuil de qualité est associée au second type de service ;
transmettre des données associées au premier type de service, des données associées au second type de service et un premier signal de référence dans un premier faisceau d'émission à un dispositif client (100) via une liaison radio (502) ;
transmettre un second signal de référence dans un second faisceau d'émission au dispositif client (100) via la liaison radio (502) ;
recevoir une indication associée à la reconfiguration de la liaison radio (502) de la part du dispositif client (100) ; et réaliser la reconfiguration de la liaison radio (502) vers le dispositif client (100) sur la base de l'indication reçue associée à la reconfiguration de la liaison radio (502) ; et
**caractérisé en ce que** le nœud d'accès au réseau est en outre configuré pour,
lorsque la qualité du premier faisceau d'émission est inférieure à la première valeur seuil de qualité et supérieure à la deuxième valeur seuil de qualité, et que la qualité du second faisceau d'émission est inférieure à la troisième valeur seuil de qualité, l'indication associée à la reconfiguration de la liaison radio (502) est reçue à l'aide de ressources associées au premier faisceau d'émission ; et
lorsque la qualité du premier faisceau d'émission est inférieure à la première valeur seuil de qualité et supérieure à la deuxième valeur seuil de qualité, et que la qualité du second faisceau d'émission est supérieure à la troisième valeur seuil de qualité, l'indication associée à la reconfiguration de la liaison radio (502) est reçue dans au moins l'une des ressources de canal de commande de liaison montante physique et des ressources de canal d'accès aléatoire associées au second faisceau d'émission ; et
lorsque la qualité du premier faisceau d'émission est inférieure à la deuxième valeur seuil de qualité et que la qualité du second faisceau d'émission est supérieure à la quatrième valeur seuil de qualité, l'indication associée à la reconfiguration de la liaison radio (502) est reçue dans des ressources de canal d'accès aléatoire associées au second faisceau d'émission.

8. Procédé (200) pour un dispositif client (100), le procédé (200) comprend
la réception (202) de données associées à un premier type de service, de données associées à un second type de service et d'un premier signal de référence, le tout transmis dans un premier faisceau d'émission à partir d'un nœud d'accès au réseau (300) via une liaison radio (502) ;
la détermination (204) de la qualité du premier faisceau d'émission sur la base du premier signal de référence reçu ;
la comparaison (206) de la qualité du premier faisceau d'émission avec une première valeur seuil de qualité et une deuxième valeur seuil de qualité, dans lequel la première valeur seuil de qualité est associée au premier type de service et la deuxième valeur seuil de qualité est associée au second type de service, et dans lequel la première valeur seuil de qualité est supérieure à la deuxième valeur seuil de qualité ;
la transmission (208) d'une indication associée à la reconfiguration de la liaison radio (502) au nœud d'accès au réseau (300) sur la base de la comparaison de la qualité du premier faisceau d'émission avec la première valeur seuil de qualité et la deuxième valeur seuil de qualité ;
la réception d'un second signal de référence transmis dans un second faisceau d'émission depuis le nœud d'accès au réseau (300) via la liaison radio (502) ;
la détermination de la qualité du second faisceau d'émission sur la base du second signal de référence reçu ; et
la comparaison de la qualité du second faisceau d'émission avec une troisième valeur seuil de qualité et une quatrième valeur seuil de qualité, dans lequel la troisième valeur seuil de qualité est associée au premier type de service et la quatrième valeur seuil de qualité est associée au second type de service, et dans lequel la troisième valeur seuil de qualité est supérieure à la quatrième valeur seuil de qualité ; et
la transmission de l'indication au nœud d'accès au réseau (300) sur la base en outre de la comparaison de la qualité du second faisceau d'émission avec la troisième valeur seuil de qualité et la quatrième valeur seuil de qualité ; et
**caractérisé en ce que** le procédé comprend en outre
lorsque la qualité du premier faisceau d'émission est inférieure à la première valeur seuil de qualité et supérieure à la deuxième valeur seuil de qualité, et que la qualité du second faisceau d'émission est inférieure à la troisième valeur seuil de qualité, la transmission de l'indication associée à la reconfiguration de la liaison radio (502) à l'aide de ressources associées au premier faisceau d'émission ; et
lorsque la qualité du premier faisceau d'émission est inférieure à la première valeur seuil de qualité et supérieure à la deuxième valeur seuil de qualité, et que la qualité du second faisceau d'émission est supérieure à la troisième valeur seuil de qualité, la transmission de l'indication associée à la reconfiguration de la liaison radio (502) dans au moins l'une des ressources de canal de commande de liaison montante physique et des ressources de canal d'accès aléatoire associées au second faisceau d'émission ; et
lorsque la qualité du premier faisceau d'émission est inférieure à la deuxième valeur seuil de qualité et que la qualité du second faisceau d'émission est supérieure à la quatrième valeur seuil de qualité, la transmission de l'indication associée à la reconfiguration de la liaison radio (502) dans les ressources de canal d'accès aléatoire associées au second faisceau d'émission.

9. Procédé (400) pour un nœud d'accès au réseau (300), le procédé (400) comprend
la transmission (402) d'une première valeur seuil de qualité et d'une deuxième valeur seuil de qualité au dispositif client (100), dans lequel la première valeur seuil de qualité est associée à un premier type de service et la deuxième valeur seuil de qualité est associée à un second type de service ;
la transmission d'une troisième valeur seuil de qualité et d'une quatrième valeur seuil de qualité au dispositif client (100), dans lequel la troisième valeur seuil de qualité est associée au premier type de service et la quatrième valeur seuil de qualité est associée au second type de service ;
la transmission (404) de données associées au premier type de service, de données associées au second type de service et d'un premier signal de référence dans un premier faisceau d'émission à un dispositif client (100) via une liaison radio (502) ;
la transmission d'un second signal de référence dans un second faisceau d'émission au dispositif client (100) via la liaison radio (502) ;
la réception (406) d'une indication associée à la reconfiguration de la liaison radio (502) de la part du dispositif client (100) ; et
la réalisation (408) de la reconfiguration de la liaison radio (502) vers le dispositif client (100) sur la base de l'indication reçue associée à la reconfiguration de la liaison radio (502) ; **caractérisé en ce que** le procédé comprend en outre :
lorsque la qualité du premier faisceau d'émission est inférieure à la première valeur seuil de qualité et supérieure à la deuxième valeur seuil de qualité, et que la qualité du second faisceau d'émission est inférieure à la troisième valeur seuil de qualité, la réception de l'indication associée à la reconfiguration de la liaison radio (502) à l'aide de ressources associées au premier faisceau d'émission ; et
lorsque la qualité du premier faisceau d'émission est inférieure à la première valeur seuil de qualité et supérieure à la deuxième valeur seuil de qualité, et que la qualité du second faisceau d'émission est supérieure à la troisième valeur seuil de qualité, la réception de l'indication associée à la reconfiguration de la liaison radio (502) dans au moins l'une des ressources de canal de commande de liaison montante physique et des ressources de canal d'accès aléatoire associées au second faisceau d'émission ; et
lorsque la qualité du premier faisceau d'émission est inférieure à la deuxième valeur seuil de qualité et que la qualité du second faisceau d'émission est supérieure à la quatrième valeur seuil de qualité, la réception de l'indication associée à la reconfiguration de la liaison radio (502) dans les ressources de canal d'accès aléatoire associées au second faisceau d'émission.

10. Programme informatique comportant un code de programme qui, lorsqu'il est exécuté par un ordinateur dans un dispositif client, amène le dispositif client à réaliser un procédé selon la revendication 8.

11. Programme informatique comportant un code de programme qui, lorsqu'il est exécuté par un ordinateur dans un nœud d'accès au réseau, amène le nœud d'accès au réseau à réaliser un procédé selon la revendication 9.

12. Système de communication sans fil (500), comprenant le dispositif client (100) selon l'une quelconque des revendications 1 à 6, et le nœud d'accès au réseau (300) selon la revendication 7.
